# EUROPEAN PATENT APPLICATION

(11) **EP 4 738 733 A1**
(43) Date of publication of application: **06.05.2026**
(21) Application number: 25210346.0
(22) Date of filing: 22.10.2025
(51) Int. Cl.: H04J 14/02, H04Q 11/00, H04J 14/00

(54) **DISTRIBUTED RECONFIGURABLE SWITCHING NODE FOR MULTIPLE CORE FIBER**

(30) Priority: 31.10.2024 US 202418933095
(71) Applicant: SubCom, LLC, Eatontown, NJ 07724 (US)
(72) Inventor: Garrett, Lara Denise, Eatontown, 07724 (US); Li, Haifeng, Eatontown, 07724 (US); Pilipetskii, Alexei N., Eatontown, 07724 (US); Kovsh, Dmitriy, Eatontown, 07724 (US)
(74) Representative: Arnold & Siedsma

(57) **Abstract**

A method and a system for transmission of optical signals. The system includes one or more first switching optical devices configured to switch transmission of one or more optical signals from one or more first fiber cores to one or more second fiber cores. It includes one or more second switching optical devices configured to pass-through transmission of one or more optical signals from one or more first fiber cores to one or more third fiber cores.

## Description

### TECHNICAL FIELD

This disclosure relates generally to optical communication systems, and in particular to multi-core fiber configuration and routing.

### BACKGROUND

Submarine optical cables are laid on the seabed or ocean floor between land-based terminals to carry optical signals across long stretches of ocean and sea. The optical cables typically include several optical fiber pairs and other components such as strengthening members, a power conductor, an electrical insulator and a protective shield. The optical fibers may be single core/mode fibers or multi-mode/core fibers. The first fiber of a fiber pair may be coupled in the system for communicating signals in a first direction on the cable and the second fiber of the fiber pair may be configured for communicating signals in a second direction, opposite the first direction, on the cable to support bi-directional communications.

In a branched submarine optical communication system, a trunk cable may extend between first and second land-based trunk terminals. The trunk cable may include a number of trunk cable segments coupled between optical amplifiers for amplifying the optical signals and may have one or more branching nodes coupled thereto. Each branching unit may be connected to a branch cable that terminates in a transmitting and/or receiving land-based branch terminal. The branch cable may include a number of branch cable segments coupled between optical amplifiers for amplifying the optical signals. Existing systems do not provide an ability to easily re-configure switching of fibers and/or fiber cores for transmission of optical signals between trunk terminals and/or branching units.

### SUMMARY

The current subject matter relates to an apparatus for transmission of one or more optical signals. The apparatus may include one or more first switching optical devices configured to switch transmission of the one or more optical signals from one or more first fiber cores to one or more second fiber cores, and one or more second switching optical devices configured to pass-through transmission of the one or more optical signals from the one or more first fiber cores to one or more third fiber cores.

The current subject matter may include one or more of the following optional features. One or more first fiber cores may be communicatively coupled to a first trunk station. One or more second fiber cores may be communicatively coupled to a branch station. One or more third fiber cores may be communicatively coupled to a second trunk station.

At least one first fiber in a plurality of first fibers may include the one or more first fiber cores. At least one second fiber in a plurality of second fibers may include the one or more second fiber cores. At least one third fiber in a plurality of third fibers may include the one or more third fiber cores. At least one first fiber may include at least of: a single first fiber core, two first fiber cores, four first fiber cores, and any combinations thereof. At least one second fiber may include at least of: a single second fiber core, two second fiber cores, four second fiber cores, and any combinations thereof. At least one third fiber may include at least of: a single third fiber core, two third fiber cores, four third fiber cores, and any combinations thereof. One or more first switching optical devices may be configured to switch transmission of one or more optical signals from at least one first fiber to at least one second fiber. One or more second switching optical devices may be configured to pass-through transmission of one or more optical signals from at least one first fiber to at least one third fiber.

A number of one or more first fiber cores being switched using one or more first switching optical devices may be at least one of: different from a number of one or more second fiber cores, and same as a number of one or more second fiber cores.

A number of one or more first fiber cores being passed-through using one or more second switching optical devices may be at least one of: different from a number of one or more third fiber cores, and same as a number of one or more third fiber cores.

The apparatus may include at least one fiber switching optical array communicatively coupled to one or more first switching optical devices and one or more second switching optical devices. At least one fiber switching optical array may be configured to determine whether to switch or pass-through transmission of one or more optical signals. At least one fiber switching optical array may select at least one first switching optical device in one or more first switching optical devices for switching transmission of one or more optical signals. At least one fiber switching optical array may select at least one second switching optical device in one or more second switching optical devices for passing-through transmission of one or more optical signals.

The current subject matter relates to a method for transmission of one or more optical signals. The method may include receiving one or more optical signals, upon a determination to switch transmission of one or more optical signals from one or more first fiber cores to one or more second fiber cores, selecting at least one first switching optical device in one or more first switching optical devices and switching, using the selected at least one first switching optical device, transmission of one or more optical signals from one or more first fiber cores to one or more second fiber cores, and upon determination to pass-through transmission of one or more optical signals from one or more first fiber cores to one or more third fiber cores, selecting at least one second switching optical device in one or more second switching optical devices and passing-through, using at least one second switching optical device, transmission of one or more optical signals from one or more first fiber cores to one or more third fiber cores.

The current subject matter may include one or more of the optional features described above and/or those below. For example, the method may also include switching transmission, using the selected at least one switching optical device, of one or more optical signals from at least one first fiber to at least one second fiber. The method may also include passing-through, using the selected at least one second switching optical device, of one or more optical signals from at least one first fiber to at least one third fiber.

The current subject matter relates to an optical communication system comprising this apparatus referred to above for carrying optical signals between land-based terminals and stretches of water, such as across long stretches of ocean and sea.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosure. In the drawings,
FIG. 1 illustrates an exemplary optical communication system;
FIG. 2 illustrates an example optical communication system, according to the present disclosure;
FIG. 3 illustrates another example optical communication system, according to the present disclosure;
FIG. 4 illustrates another example optical communication system that includes an optical switching device having one or more optical switching matrices, according to the present disclosure;
FIG. 5 illustrates another example optical communication system, according to the present disclosure;
FIG. 6a illustrates another example optical communication system, according to the present disclosure;
FIG. 6b illustrates another example optical communication system, according to the present disclosure;
FIG. 6c illustrates another example optical communication system, according to the present disclosure;
FIG. 6d illustrates yet another example optical communication system, according to the present disclosure;
FIG. 6e illustrates a further example optical communication system, according to the present disclosure;
FIG. 7 illustrates an example process for transmission of one or more optical signals, according to the present disclosure; and
FIG. 8 illustrates an example processing system, according to the present disclosure.

### DETAILED DESCRIPTION

Systems, and devices in accordance with the present disclosure will now be described more fully hereinafter with reference to the accompanying drawings.. The systems and devices may be embodied in many different forms and are not to be construed as being limited to the disclosure set forth herein. Instead, these examples are provided so the disclosure will be thorough and complete, and will fully convey the scope of methods and devices to those skilled in the art. Each of the systems, devices, and methods disclosed herein provides one or more advantages over conventional systems, components, and methods.

Undersea cables are typically implemented with trunk and branch architectures. Typical connection architectures at each branching node designate attached cables as "trunk" cable(s) and as a "branch" cable(s). At a network unit, for single core/mode fiber, the fiber switches on each trunk fiber pair are configured so that an individual trunk fiber pair either connects to, or bypasses, a corresponding set of branch fiber pairs.

Multiple core/mode fibers are fibers that may include one or more optical fiber cores capable of transmission of one or more optical signals. In these fiber types, a bi-directional transmission path may be referred to as a core-pair instead of a fiber-pair. When optical signals are transmitted, it may be necessary to reconfigure capacity routing for a particular multi-core fiber, either on a per fiber core and/or multiple fiber cores. Such reconfiguration may be executed using one or more capacity routing functions, such as, for example, entire core pair switching (with or without per-fiber attenuation), individual core switching (with or without per-core attenuation), and optical spectrum routing (with or without optical frequency dependent attenuation). Any of the three capacity routing functions may be configured to include any other optical attenuation functions. Moreover, the functions may be implemented in one or more undersea cable branch stations that may be housed in one or multiple undersea housing units. Further, subsea cable system(s) may include multiple nodes, where one or more nodes may include the same or different capacity routing configurations (e.g., one, two or all three capacity routing functions). Different solutions per fiber-pair or per core-pair may be implemented in the same node for the multiple fiber pairs being routed there. Moreover, routing functions may be organized with coupling among different number of trunk fiber/core pairs and branch fiber/core pairs (e.g., single trunk fiber/core pair to two branch fiber/core pairs, four trunk fiber/core pairs to two branch fiber/core pairs, etc.). Alternatively, or in addition, routing functions may be implemented on fibers with different numbers of cores (e.g., one core per fiber, two cores per fiber, four cores per fiber, etc.).

The current subject matter may provide an optical transmission system or apparatus that be configured to provide processing (e.g., switching, passing-through or bypassing) and/or otherwise configuring and/or reconfiguring transmissions of optical signals transmitted using one or more fiber(s) and/or fiber core(s) within one or more fiber(s). Such apparatus may include one or more switching optical devices and one or more bypass optical devices. The switching/bypass optical devices may be optical switches and/or other devices that may provide functionalities of switching/bypassing of optical signals. The switching optical device(s) may be configured to switch transmission of optical signal(s) from one or more first fiber cores (e.g., communicatively coupled to a first trunk station) to one or more second fiber cores (e.g., communicatively coupled to a branch station). The bypass optical device(s) may be configured to pass-through or bypass transmission of optical signal(s) from one or more first fiber cores to one or more third fiber cores (e.g., communicatively coupled to a second trunk station).

Alternatively, or in addition, the switching optical device(s) may be configured to switch transmission of optical signal(s) from one or first fibers (e.g., communicatively coupled to the first trunk station), which may include one or more first fiber cores, to one or more second fibers (e.g., communicatively coupled to the branch station), which may include one or more second fiber cores. Likewise, the bypass optical device(s) may be configured to pass-through or bypass transmission of optical signal(s) from one or more first fibers to one or more third fibers (e.g., communicatively coupled to the second trunk station). As can be understood, the fibers (e.g., first, second, third, etc.) may include at least of: a single first fiber core, two first fiber cores, four first fiber cores, and/or any number of fiber cores, and/or any combinations thereof.

The switching optical devices may be configured to switch all or some of the fiber cores (e.g., within a fiber) and/or fibers going from one station (e.g., trunk station, branch station, etc.) to another station (e.g., branch station, trunk station, etc.). For example, the optical switching may be one-to-one, e.g., same number of fiber cores (e.g., within a fiber) and/or fibers, one-to-many, and/or many-to-many (where number of switched fibers/fiber cores may be the same and/or different from those to which transmission is being switched to), and/or any combination thereof. Similarly, the bypass optical devices may be configured pass-through all or some of the fiber cores (e.g., within a fiber) and/or fibers going one station (e.g., trunk station, branch station, etc.) to another station (e.g., branch station, trunk station, etc.). Again, the optical pass-through may be one-to-one, one-to-many, and/or many-to-many fibers/fiber cores, etc., and/or any combination thereof.

An optical fiber-in-fiber-out (FIFO) array may be communicatively coupled to one or more fibers and/or fiber cores. The FIFO array may be communicatively coupled between various trunk stations and/or branch stations. Alternatively, or in addition, the FIFO array may be disposed in one or more stations, such as, for example, but is not limited to, a branch station. The FIFO array may be configured to determine whether to switch or pass-through transmission of one or more optical signals that are received from one or more stations (e.g., trunk station, branch station). Once such determination is made, the FIFO array may be configured to be used for selection of a specific respective switching optical device for switching of transmission of optical signal(s) and/or a specific respective bypass optical device for passing-through of transmission of optical signal(s). More than one FIFO array may be used for processing of optical signals being transmitted between different stations.

The selection of optical devices and how switching/passing through of signals may be executed may be dependent on one or more factors. Such factors may include specific purposes of the system, architecture of the system (e.g., layout of, number, locations, etc. of communication nodes (i.e., stations)), an amount of communication traffic that the system is to handle, desired communication speed, as well as any other desired factors, and/or any combination of factors.

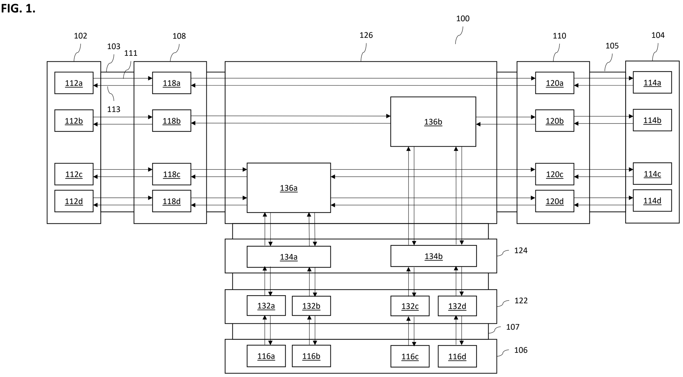

FIG. 1 illustrates an example optical communication system 100. The system 100 may be used for transmission of one or more optical communication signals using optical communication cables that include single-core fibers. The system 100 may be configured to provide one or more options for switching of fibers for the purposes of transmission of signals. In particular, the system 100 may be configured to include fiber pairs between trunk stations that may be carried on a trunk cable. Further, fiber pairs between a branch station and a branching node may be carried on a branch cable. A branching unit in the system 100 may be configured to perform fiber switching between trunk and/or branch fiber pairs. The system 100 may also include one or more reconfigurable optical add-drop multiplexers (OADMs), one or more of which may be configurable to perform spectrum routing between one or more trunk and branch fiber pairs. Further, one or more trunk fiber pairs may be communicatively coupled to branch station and different fiber switching options may be available for different trunk fiber pairs. Additionally, the system may include one or more repeaters that may include one or more optical amplifiers positioned on one or more optical paths (e.g., fiber cores) and may be configured to compensate for optical signal loss.

As shown in FIG. 1, the system 100 may include a trunk station 102, a trunk station 104, a branch station 106, and a branching node 126. Trunk station 102 may be communicatively coupled to the branching node 126 using a trunk cable 103. Trunk station 104 may be communicatively coupled to the branching node 126 using a trunk cable 105. Branch station 106 may be communicatively coupled to the branching node 126 using branch cable 107. Each of the cables 103, 105, 107 may be single core fiber cables.

Trunk station 102 may be communicatively coupled to the branching node 126 via one or more trunk repeaters 108 that may be positioned on the trunk cable 103. Similarly, trunk station 104 may be communicatively coupled to the branching node 126 via one or more trunk repeaters 110 that may be positioned on the trunk cable 105. Branch station 106 may be communicatively coupled to the branching node 126 via one or more branch repeaters 122 that may be positioned on the branch cable 107.

Further, trunk station 102 may include one or more fiber pairs components 112 (a, b, c, d), which may include one or more corresponding shape compensation filters (SCFs). Each fiber pair component 112 may include an outgoing transmitting fiber and an incoming receiving fiber, as indicated by the arrows. For example, fiber pair component 112a may be communicatively coupled to an outgoing transmitting fiber 111 and an incoming receiving fiber 113. The other fiber pair components 112 may likewise be coupled to their own outgoing and incoming fibers. Each of these fibers may be single core fibers.

Trunk station 104 may include one or more fiber pair components 114 (a, b, c, d) having corresponding SCFs, where each fiber pair component 114 may be communicatively coupled to respective incoming and outgoing fibers. As shown in FIG. 1, an optical signal transmitted from the fiber pair component 112a at trunk station 102 on an outgoing transmitting fiber may eventually be received by the fiber pair component 114a at trunk station 104 on an incoming receiving fiber.

Branch station 106 may include one or more fiber pair components 116 (a, b, c, d), which may include one or more corresponding SCFs. Each fiber pair component may be communicatively coupled to outgoing transmitting and incoming receiving fibers. As shown in FIG. 1, similar to the trunk station signal transmissions, an optical signal transmitted from fiber component 112c on an outgoing transmitting fiber may eventually be received by the fiber component 116a at the branch station 106 on the incoming receiving fiber, and/or, alternatively, or in addition, the signal may be received on by the fiber component 114c at the trunk station 104 on its incoming receiving fiber. As stated above, each of the fibers may be single core fibers.

Optical signals transmitted from and/or received by the trunk stations 102, 104 and/or branch station 106 may be amplified by respective repeaters that include one or more transmitting and receiving amplifiers positioned on the respective fibers. For example, the trunk station 102 may be communicatively coupled to the repeater 108, where the repeater 108 may include amplifiers 118 (a, b, c, d). Each amplifier 118 may include a transmitting amplifier and a receiving amplifier, e.g., amplifier 118a may include a transmitting amplifier to amplify optical signal being transmitted on the fiber 111, and a receiving amplifier to amplifier optical signal being received on the fiber 113. Similarly, trunk station 104 may be communicatively coupled to the repeater 110 having amplifiers 120 (a, b, c, d). The branch station 106 may be communicatively coupled to the repeater 122 having amplifiers 132 (a, b, c, d). As can be understood, a single amplifier may be configured to perform amplification of outgoing and incoming signals.

For instance, an optical signal transmitted from the fiber core component 112a may be amplified by an amplifier 118a (e.g., a transmitting amplifier) in the repeater 108, where, prior to being received by the fiber core component 114a, that signal may be amplified by the amplifier 120a (e.g., a receiving amplifier) in the repeater 110. Conversely, an optical signal transmitted from the fiber core component 114a may be amplified by the amplifier 120a (e.g., a transmitting amplifier) in the repeater 110 and, prior to being received by the fiber core component 112a, the signal may be amplified by the amplifier 118a (e.g., a receiving amplifier) in the repeater 108. Similarly, an optical signal transmitted from the fiber core component 112c may be amplified by an amplifier 118c (e.g., a transmitting amplifier) in the repeater 108 and, prior to being received by the fiber core component 116a in the branch station 104, the signal may be amplified by the amplifier 132a (e.g., a receiving amplifier) in the repeater 122. Likewise, an optical signal transmitted from the fiber core component 116a may be amplified by the amplifier 132a (e.g., a transmitting amplifier) in the repeater 108 and, prior to being received by the fiber core component 112c, the signal may be amplified by the amplifier 118c (e.g., a receiving amplifier) in the repeater 108. As can be understood, there can be any number of repeaters 108, 110, and/or 122 positioned on the respective cables 103, 105, and/or 107.

The cables 103, 105, 107 may be configured to communicatively couple respective trunk stations 102, 104 and branch station 106 to the branching node 126. There may be one or more branching node 126 that may be positioned between the trunk stations 102, 104 and/or the branch station 106. The branching node 126 may be configured to perform switching of transmissions of optical signals being transmitted from either the trunk stations 102, 104 and/or the branch station 106. To perform switching of transmission of optical signals, the branching node 126 may include one or more switching devices (e.g., optical switches and/or any other types of switches) 136 (a, b). Switching devices 136 may be configured as single fiber pair switching devices (e.g., switching device 136b) and/or as multiple fiber switching devices (e.g., switching device 136a). Each switching device 136 may be configured to switch a single core fiber.

Moreover, the branching node 126 may be configured to perform pass-through or bypass of optical signal transmissions between stations. For example, optical signals transmitted between fiber core component 112a in the trunk station 102 and fiber core component 114a in the trunk station 104 may be configured to be passed through by the branching node 126.

The branching node 126 may also include an SCF reconfigurable OADM (ROADM) component 124, which is a variation of OADM that may be configured to perform remote switching of traffic from a wavelength-division multiplexing (WDM) system at a wavelength layer, which may be configurable attenuation for the SCF function. Alternatively, or in addition, the component 124 may be separate from the branching node 126 and be communicatively coupled to the branching node 126. The component 124 may be positioned on the branch cable 107.

The component 124 may include a ROADM component 134a and a ROADM component 134b. The ROADM component 134a may be communicatively coupled to the switching device 136a and to the amplifiers 132a, 132b in the repeater 122 for processing of optical signals being transmitted to and/or received from the branch station's components 116a, 116b, respectively. The ROADM component 134b may be communicatively coupled to the switching device 136b and to the amplifiers 132c, 132d in the repeater 122 for processing of optical signals being transmitted to and/or received from the branch station's components 116c, 116d, respectively.

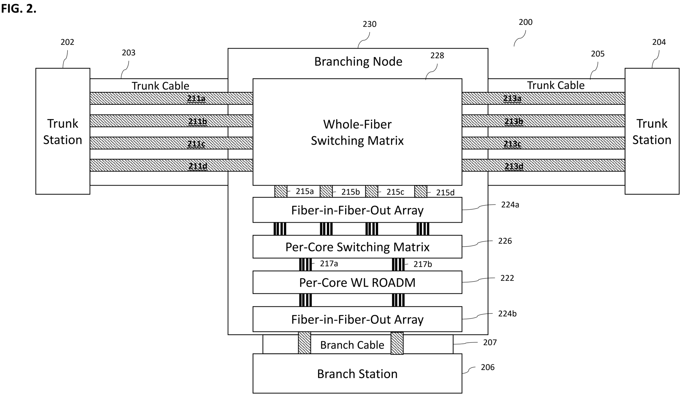

FIG. 2 illustrates an example optical communication system 200, according to the present disclosure. The system 200 may include a trunk station 202, a trunk station 204, a branch station 206, and a branching node 230. Trunk station 202 may be communicatively coupled to the branching node 230 using a trunk cable 203. Trunk station 204 may be communicatively coupled to the branching node 230 using a trunk cable 205. Branch station 206 may be communicatively coupled to the branching node 230 using a branch cable 207. Each of the cables 203, 205, 207 may include multiple core fibers.

The system 200 may be configured to provide multiple layers (e.g., three, as shown in FIG. 2) for routing of optical signals on a multi-core fiber (MCF) that may include any number of fiber cores. For example, the system 200 may provide whole fiber switching on trunk cables and may be configured to communicatively couple entire trunk fiber(s) to branch fiber(s) and/or bypass the branch fiber(s) entirely. The system 200 may also include fiber-in-fiber-out array(s) and/or an optional MxN per-core switching matrix for the purposes of re-routing of individual fiber cores between fibers. Moreover, a wavelength level ROADM device may be included for remotely controlling switching of optical signal traffic. Additionally, another fiber-in-fiber-out array(s) may be included for re-combination of fibers for transmission of optical signals to the branch station.

As shown in FIG. 2, the trunk cable 203 may include one or more multi-core fibers 211 (a, b, c, d) that may communicatively couple the trunk station 202 with the branching node 230, and in particular, branching unit's whole-fiber switching matrix 228. The switching matrix 228 may include one or more optical switches that may be configured to switch routing of optical signals transmitted on one or more fibers 211 and/or any of their respective fiber cores to the branch station 206 and/or bypass and/or pass-through routing of such signals (on any or the fibers 211 and/or its cores) to the trunk station 204.

Similarly, the trunk cable 205 may include trunk cables 213 (a, b, c, d) that may communicatively couple trunk station 204 to the branching node 230 and its switching matrix 228. The respective fibers 211 and 213 may form single fibers. Alternatively, or in addition, each trunk cable's fiber 211, 213 may be its own fiber that communicatively couples respective trunk stations to the switching matrix 228.

The branching node 230 may include the switching matrix 228, one or more FIFO arrays 224a, a per-core switching matrix 226, a per core WL ROADM component 222, and another one or more FIFO arrays 224b. The above components of the branching node 230 may be disposed in one and/or separate housings. For example, the switching matrix 228 may be disposed in its own housing, whereas the arrays 224 (a, b), component 222, and switching matrix 226 may be disposed in another housing. As can be understood, any combination of housings that may house any of the above components is possible. Further, there may be more than one branching node 230, including any of its associated components (e.g., 228, 224, 226, 222), that may be part of the system 200.

The switching matrix 228 may be communicatively coupled to the FIFO array 224a using fibers 215 (a, b, c, d). The fibers 215 may be configured to transmit optical signals to and/or from trunk stations 202, 204 on fibers respective 211, 213 and the branch station 206 as a result of being switched using the switching matrix 228.

The FIFO array 224 may be configured to route and/or re-route, along with the per-core switching matrix 226 individual fiber cores. For example, the switching matrix 226 may be communicatively coupled to fiber cores 217 (a, b), whereas, upon processing of optical signals transmitted on fiber cores of fibers 215 (a, b, c, d) (to or from branch station 206), the switching matrix 226 may be configured to switch signals from one or more fiber cores in fibers 215 to one or more fiber cores in fibers 217.

The switching matrix 226 may be configured as an MxN per core switching matrix, where M and N may be same and/or different. For example, optical signals on M fiber cores (e.g., on fibers 215) may be switched into N fiber cores (e.g., on fibers 217). While FIG. 2 illustrates that switching matrix 226 is switching four fibers 215 into two fibers 217, as can be understood, the current subject matter is not limited to the shown arrangement.

The signals in fibers 217 may then be processed by the component 222. As stated above, component 222 may be configured as a wavelength level ROADM optical communication device. In particular, the component 222 may be configured to perform wavelength level processing of optical signals transmitted on fiber cores of fibers 217 (a, b) (to and/or from branch station 206). The processing of optical signals may then be configured to continue with another FIFO array 224b, which may recombine the optical signals for transmission to and/or from branch station 206.

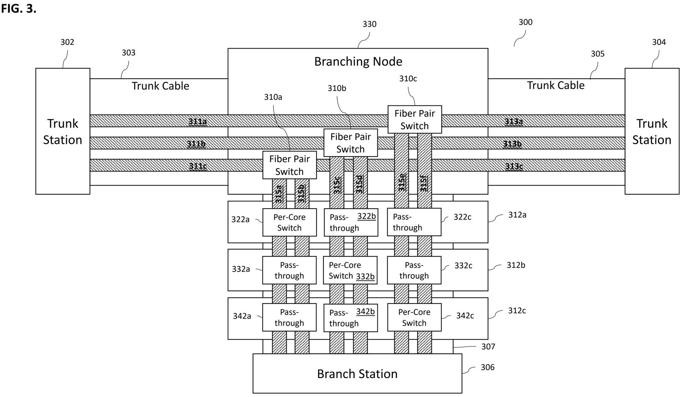

FIG. 3 illustrates another example optical communication system 300, according to the present disclosure. Similar to the system in FIG. 2, the system 300 may include a trunk station 302, a trunk station 304, a branch station 306, and a branching node 330. Trunk station 302 may be communicatively coupled to the branching node 330 using a trunk cable 303. Trunk station 304 may be communicatively coupled to the branching node 330 using a trunk cable 305. Branch station 306 may be communicatively coupled to the branching node 330 using a branch cable 307. Each of the cables 303, 305, 307 may include multiple core fibers.

The trunk cable 303 may include fibers 311 (a, b, c) and the trunk cable 305 may include fibers 313 (a, b, c). The fibers 311 may communicatively couple the trunk station 302 to one or more fiber optical switches 310 (a, b, c). Similarly, the fibers 313 may be configured to communicatively couple the trunk station 304 to the switches 310. As can be understood, trunk cables 303 and 305 may include more than three fibers 311, 313, respectively.

The branch cable 307 may include one or more configurable/reconfigurable optical switching units (or components, devices, etc.) 312 (a, b, c) being positioned on it. Each switching unit 312 may be configured/reconfigured to either optically switch optical signals being transmitted from switches 310 on one or more cores in fibers 315 (a, b, c, d, e, f) and/or pass them through. As can be understood, the system 300 may include any number of switching units 312, as well as any number of branching nodes 330. The switching units 312 may be housed in the same housing as the branching node 330 and/or may be in one or more separate housings.

As shown in FIG. 3, optical switch 310a may be communicatively coupled to fibers 311c and 313c, and may be configured to switch optical signals transmitted on one or more cores of fibers 311c, 313c to fibers 315a and/or 315b. Likewise, optical switch 310b may be communicatively coupled to fibers 311b and 313b, and may be configured to switch optical signals transmitted on one or more cores of fibers 311b, 313b to fibers 315c and/or 315d. Similarly, optical switch 310c may be communicatively coupled to fibers 311a and 313a, and may be configured to switch optical signals transmitted on one or more cores of fibers 311a, 313a to fibers 315e and/or 315f.

Each switching unit 312 may be configured to include one or more configurable/reconfigurable switching devices, which may perform per-fiber-core switching and/or passing through of optical signals. For example, unit 312a may include devices 322 (a, b, c), where, as shown in FIG. 3, device 322a may be configured as a per-core switch and devices 322b and 322c may be configured as pass-through devices. Unit 312b may include devices 332 (a, b, c), where, as shown in FIG. 3, device 332b may be configured as a per-core switch and devices 332a and 332c may be configured as pass-through devices. Similarly, unit 312c may include devices 342 (a, b, c), where, as shown in FIG. 3, devices 342a and 342b may be configured pass-through devices and device 342c may be configured as a per-core switch. Thus, for instance, an optical signal being transmitted from the trunk station 302 on the fiber 311c may be switched by the optical switch 310a onto one or more of fibers 315a and 315b, optically-switched by the device 322a of the unit 312a and passed through by devices 332a, 342a of units 312b, 312c, respectively. Alternatively, or in addition, this optical signal may be switched by the device 332b of unit 312b and passed through by the device 342b of unit 312c. As can be understood, any configuration and/or reconfiguration of switching and/or passing through of optical signals may be performed by the units 312. Moreover, each switching unit 312 may have any number of switching/pass-through devices and/or any other type of optical device that may perform switching of optical signals and/or passing through of optical signals.

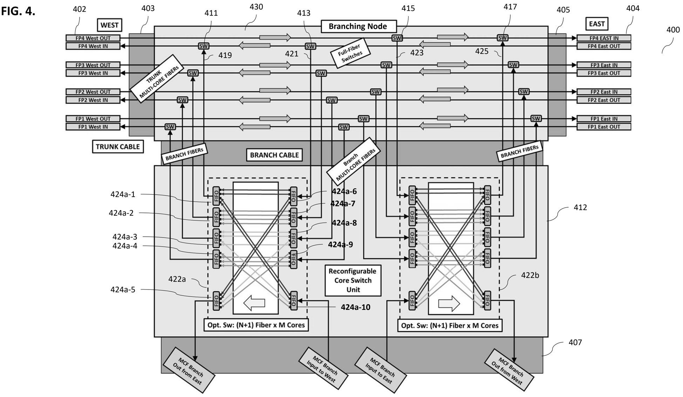

FIG. 4 illustrates another example optical communication system 400 that includes an optical switching device having one or more optical switching matrices, according to the present disclosure. The system 400 may communicatively couple a trunk stations 402 and 404 as well as a branch station (not shown in FIG. 4), and a branching node 430. Trunk station 402 (e.g., located at "West") may be communicatively coupled to the branching node 430 using a trunk cable 403 that may include four pairs of fibers for receiving ("IN") and transmitting ("OUT) of optical signals (i.e., "FP1 West IN; FP1 West OUT"; "FP2 West IN; FP2 West OUT"; "FP3 West IN; FP3 West OUT"; and "FP4 West IN; FP4 West OUT"). Similarly, trunk station 404 (e.g., located at "East") may be communicatively coupled to the branching node 430 using a trunk cable 405 that may include four pairs of fibers for receiving ("IN") and transmitting ("OUT) of optical signals (i.e., "FP1 East IN; FP1 East OUT"; "FP2 East IN; FP2 East OUT"; "FP3 East IN; FP3 East OUT"; and "FP4 East IN; FP4 East OUT"). Branch station (not shown in FIG. 4) may be communicatively coupled to the branching node 430 using a branch cable 407. Each of the cables 403, 405, 407 may include multiple core fiber cables.

An optical switching unit 412 that may include one or more per-core switching matrices 422a and 422b that may be positioned on the branch cable 407. The unit 412 may be configured to provide routing of optical signals between trunk stations and the branch station. In particular, the matrices 422 may include one or more FIFO arrays 424 that may provide optical switching for fibers and fiber cores (e.g., N+1 fibers to M fiber cores).

The fiber pairs may include on or more optical switches (e.g., full fiber optical switch) that may be positioned on the receiving and transmitting fibers. The switches may be configured to provide optical switching and/or pass-through functionalities between the trunk stations' fibers and the branch station fibers.

As shown in FIG. 4, optical switch 411 may be positioned on a receiving FP4 West IN fiber and may be configured to switch an optical signal being transmitted from the FIFO array 424a-1, which, in turn, may be transmitted from FIFO array 424a-10, which, in turn, maybe transmitted from an input to the branch station directed to the west trunk station (i.e., station 402).

Switch 413 that may also be positioned on the receiving FP4 West IN fiber may be configured to switch an optical signal being transmitted from FP4 East OUT into the FIFO array 424a-6, which, in turn, may route it to the FIFO array 424a-5 as an output signal from the east trunk station (i.e., station 404) to the branch station. Switch 413 may be configured as a pass-through optical switch and allow pass-through transmission of optical signals between FP4 East Out to FP4 West IN.

Switches 415 and 417, positioned on the receiving FP4 East IN fiber may be configured to switch transmission of optical signals via the optical switching matrix 422b and its FIFO arrays. As can be understood, the system 400 may include other optical switches (that may be positioned on East and West fiber pairs) that may be configured to switch and/or pass through transmissions of optical signals between trunk stations 402, 404 and branch station. These switches may be communicatively coupled to one or both matrices 422a and 422b and their respective FIFO arrays 424.

The FIFO arrays 424 may be configured and/or reconfigured for different ways of routing of optical signals by switching of fiber cores. For example, in the matrix 422a, the FIFO array 424a-6 may be configured to route some optical signals via two fiber cores to FIFO array 424a-1 and route other optical signals to FIFO array 424a-5 via other two fiber cores. FIFO array 424a-7 may be configured to use all of fiber cores to route all optical signals to FIFO array 424a-2. FIFO array 424a-8 may be configured to use first, second and fourth fiber cores to route some optical signals to the FIFO array 424a-3 and use a third fiber core to route other optical signals to the FIFO array 424a-5. FIFO array 424a-9 may be configured to use first fiber core to route some optical signals to the FIFO array 424a-5 and use a second, third, and fourth fiber cores to route other optical signals to the FIFO array 424a-4. FIFO array 424a-10 may be configured to use all of first and second fiber cores to route some optical signals to FIFO array 424a-1, use third fiber core to route optical signals to FIFO array 424a-3, and use fourth fiber core to route optical signals to FIFO array 424a-4. The FIFO arrays 424 in the matrix 422b may similarly configured and/or reconfigured. As can be understood, the matrices 422, including their inputs and/or outputs, may be configured and/or reconfigured in any desired way. Moreover, configurations and/or reconfigurations of FIFO arrays 424 may be performed dynamically, and/or triggered by the arriving and/or departing signals.

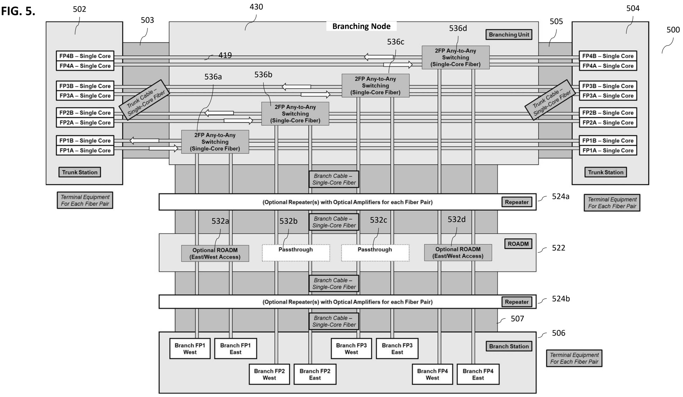

FIG. 5 illustrates another example optical communication system 500 that includes an optical switching devices, such as, for example ROADM optical devices and one or more repeaters with amplifiers, according to the present disclosure. The system 500 may communicatively couple a trunk stations 502, 504, a branch station 506, and a branching node 530. Trunk station 502 or west trunk station may be communicatively coupled to the branching node 530 using a trunk cable 503 that may include four pairs of fibers for receiving and transmitting of optical signals (i.e., FP1A (for transmitting); FP1B (for receiving); FP2A (for transmitting); FP2B (for receiving); FP3A (for transmitting); FP3B (for receiving); and FP4A (for transmitting); FP4B (for receiving)). Similarly, trunk station 504 or east trunk station may be communicatively coupled to the branching node 530 using a trunk cable 505 that may include four pairs of fibers for receiving and transmitting of optical signals, which corresponding to FP(1-4)(A-B) fiber pairs of the trunk cable 503. Branch station 506 may be communicatively coupled to the branching node 530 using a branch cable 507. Each of the cables 503, 505, 507 may include multiple core fiber cables.

The branch station 506 may include branch fiber pairs in the branch cable 507 that may be communicatively coupled to one or more of the fiber pairs FP(1-4)(A-B) of the trunk stations 502, 504 using one or more optical switching devices 536 (a, b, c, d) in the branching node 530. For example, the optical switching device 536a may communicatively couple FP1A and FP1B to "Branch FP1 West" and "Branch FP1 East" fiber pairs in the branch station 506. The optical switching device 536b may communicatively couple FP2A and FP2B to "Branch FP2 West" and "Branch FP2 East" fiber pairs in the branch station 506. The optical switching device 536c may communicatively couple FP3A and FP3B to "Branch FP3 West" and "Branch FP3 East" fiber pairs in the branch station 506. The optical switching device 536d may communicatively couple FP4A and FP4B to "Branch FP4 West" and "Branch FP4 East" fiber pairs in the branch station 506.

The optical switching devices 536 may be configured as multi-fiber pair (e.g., 2 fiber pair) optical switching devices that may be configured and/or re-configured for switching and/or passing through of optical signals transmitted on any-to-any fiber pairs basis between trunk stations 502, 504 and the branch station 506.

The branch cable 507 may be configured to include one or more optional repeaters 524a, 524b and a ROADM component 522. The repeaters 524 may be configured to include one or more optical amplifiers positioned on each fiber pair. The ROADM component 522 may be positioned between repeaters 524, as shown in FIG. 5. The ROADM component 522 may include one or more optical switching devices 532 (a, b, c, d). Some devices may be configured as ROADM devices (e.g., devices 532a and 532d) for providing transmission of signals between east and west trunk stations and the branch station. Other devices may be configured as passthrough devices (e.g., devices 532b and 532c). As can be understood, any desired configuration of devices 532 is possible. Moreover, devices 532 may be configured and/or reconfigured dynamically.

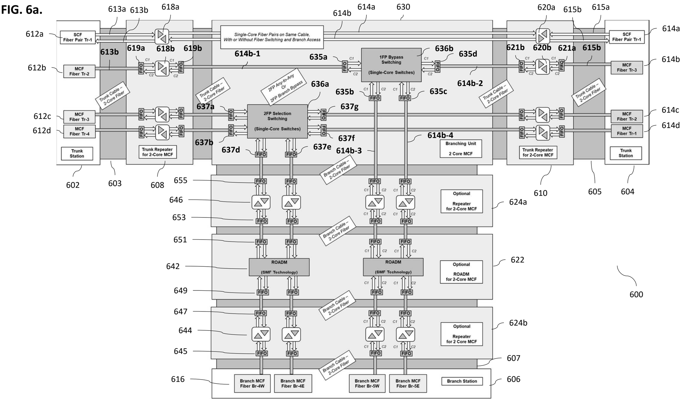

FIG. 6a illustrates another example optical communication system 600, according to the present disclosure. The system 600 may communicatively couple trunk stations 602, 604, a branch station 606, and a branching node 630. In the system 600, some of the single-core fibers may be replaced with 2-core (or multi-core) fiber in the trunk stations 602, 604, and/or branch station 606. This may be beneficial as only a fraction (e.g., half) of as many fibers may be needed (as compared to FIG. 1, for example). The two fiber cores in each fiber may be configured to transmit optical signals going the same direction through the system 600, and/or in opposite directions so that one 2-core fiber may replace one single-core fiber pair. Moreover, in system 600, each optical switching and/or amplification component may be communicatively coupled to FIFO arrays (on the input and output sides of the devices) to enable separation and/or combination of optical signals from two cores in each fiber.Amplifiers, optical switches, and/or reconfigurable OADM devices may be configured as single-core device. Further, single-core fibers may be carried in the same optical cables as multiple-core fibers, where amplifiers, switches, and/or ROADM device may be positioned in the same housings. One of the benefits of the system 600 is that it may be able to support a hybrid cable arrangement, where one or more single-core fiber (SCF) pairs may be carried on same cable with the multi-core fiber (MCF) fibers. As can be understood, any number of fiber cores may be used and/or combined.

As shown in FIG. 6a, the trunk station 602 may include a single core fiber (SCF) fiber pair Tr-1 612a, multi-core fiber (MCF) fibers Tr-2, Tr-3, and Tr-4 612 (b, c, d). The SCF fiber pair 612a may be communicatively coupled to single core transmitting fiber 613a and single core receiving fiber 613b. The fibers 613 may be communicatively coupled to an amplifier (or amplifiers) 618a in the repeater 608, which may be configured to amplify transmitting and receiving signals, respectively. As can be understood there may be more than one repeater 608. The amplifiers 618a may be communicatively coupled to transmitting fiber 614a and receiving fiber 614b that may pass through branching node 630 (e.g., on the same cable) with and/or without fiber switching and/or access to branch station 606. The fibers 614a and 614b may be communicatively coupled to the amplifier(s) 620a in the repeater 610, which may be configured to amplify transmitting and receiving signals, respectively. The amplifier(s) 620a may be communicatively coupled to the transmitting fiber 615a and receiving fiber 615b that are communicatively coupled to the SCF fiber pair Tr-1 614a in the trunk station 604.

The MCF fiber Tr-2 612b may be communicatively coupled to the amplifier 618b in the repeater 608 using multi-core fiber 613b via a fiber-in-fiber-out (FIFO) component 619a. The FIFO component 619a may be configured to separate transmission of optical signals into the amplifier 618a into transmitting optical signal C1 and a receiving optical signal C2, which, once amplified, may be recombined by another FIFO component 619b for transmission on the fiber 614b-1 in the branching node 630. The MCF fiber 614b-1 may communicatively couple the FIFO component 619b and FIFO component 635a, which, in turn, may be communicatively coupled to a switching device 636b.

The switching device 636b may be configured to be single fiber pair (1FP) bypass switching device. The device 636b may route/reroute transmissions of optical signals between the trunk station 602 and the trunk station 604 and/or between the branch station 606 and the trunk stations 602, 604. The switching device 636b may be configured to be communicatively coupled to the MCF fiber 614b-2 via the FIFO device 635d for routing optical signals to/from the trunk station 604. The MCF fiber 614b-2 may be communicatively coupled to an amplifier 620b via a FIFO device 621b in the repeater 610. The amplifier 620b may be coupled to a FIFO device 621a, which in turn is coupled to an MCF fiber 615b communicatively coupling to the MCF Fiber Tr-3 component 614b of the trunk station 604. The MCF fibers 614b-2 and 615b (as well as 614b-1 and 613b) may be configured to allow transmissions of optical signals on transmitting and/or receiving paths to/from respective trunk stations.

Moreover, the switching device 636b may be communicatively coupled to the FIFO devices 635b and 635c, which are, in turn, may be communicatively coupled to the MCF fibers 614b-3 and 614b-4, respectively. The MCF fibers 614b-3 and 614b-4 may be configured to allow transmissions of optical signals on transmitting and/or receiving paths between trunk stations and the branch station 606.

The MCF fibers 614b-3 and 614b-4 may be communicatively coupled to respective amplifiers 646 for amplification of optical signals via respective FIFO devices 655 in an optional repeater 624a. The amplifiers 646 may likewise be communicatively coupled to the respective FIFO devices 653 in the repeater 624a. The FIFO devices 653 may further be communicatively coupled via MCF fibers to respective FIFO devices 651, which are, in turn, communicatively coupled to respective ROADM devices 642 in an optional ROADM component 622. The ROADM devices 642 may also be communicatively coupled to respective FIFO devices 649. MCF fibers may be configured to communicatively couple FIFO devices 649 of the ROADM component 622 to respective FIFO devices 647 of another optional repeater 624b, which may have a similar structure as the repeater 624a, and may include amplifiers 644 coupled to FIFO devices 647 and 645. FIFO devices 645 may be communicatively coupled to the respective branch MCF fiber components 616. Components 616 may, for instance, include: Branch MCF Fiber Br-5W component for processing transmissions between branch station 606 and component 612b of the trunk station 602; Branch MCF Fiber Br-5E component for processing transmission between branch station 606 and component 614b of the trunk station 604; Branch MCF Fiber Br-4W component for processing transmission between branch station 606 and components 612c and/or 612d of trunk station 602; and Branch MCF Fiber Br-4E component for processing transmissions between branch station 606 and components 614c and/or 614d.

The Branch MCF Fiber Br-4E and Br-4W may be communicatively coupled via the respective amplifiers 644 (via FIFO devices 645, 647) of the optional repeater 624b, ROADM device 642 (via FIFO devices 649, 651) of the optional ROADM component 622, and amplifiers 646 (via FIFO devices 653, 655) of the optional repeater 624a to another switching device 636a in the branching node 630. The communicative coupling of these devices may be accomplished using MCF fibers, as discussed above in connection with discussion of the connections associated with the switching device 636b. The switching device 636a may be configured to communicatively couple multiple MCF fiber Tr components in the trunk stations 602 and 604, such as, for example, components 612c, 612d in trunk station 602 and components 614c, 614d in trunk station 604. The connections formed between these components and the switching device may be similar to those formed by the components 612b, 614b and the switching device 636b, where each connection to the switching device 636b may be made via a respective FIFO device 637 (a, b, d, c, e, f, g), as shown in FIG. 6a.

As shown in FIG. 6a, some of the optical components, such as, for example, amplifiers (e.g., some of amplifiers 618, 620, and amplifiers 646, 644), switching devices (e.g., switching devices 636a, 636a), ROADM devices (e.g., ROADM devices 642) may include respective FIFO devices (e.g., FIFO devices 619, 621, 635, 637, 645, 647, 649, 651, 653, 655) that may be positioned on input/output connections of these optical components. Such FIFO devices may be configured to perform splitting and/or recombining of optical signals that are being transmitted into and/or out of the optical components. This may be helpful for using MCF fibers to connect such optical components.

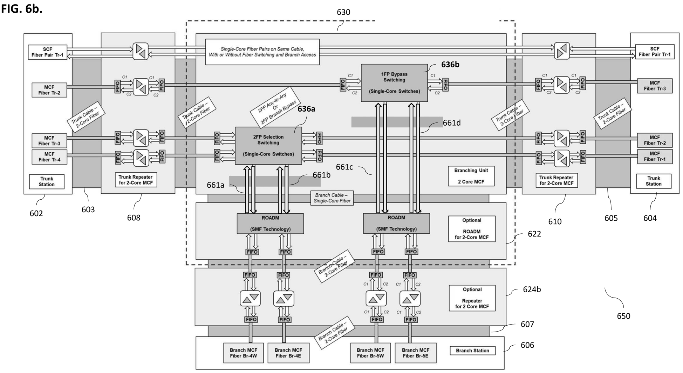

FIG. 6b illustrates another example optical communication system 650, according to the present disclosure. The system 650 may be similar to the system 600 and may likewise communicatively couple trunk stations 602, 604, the branch station 606, and the branching node 630. The system 650 may be configured to remove the optional repeater 624a and directly communicatively couple switching devices 636 (a, b) to the ROADM devices in the ROADM component 622. Moreover, the FIFO devices (e.g., FIFO devices 635 (b, c), 637 (d, e), and 651) may likewise be removed. Removal of the FIFO devices (and/or the optional repeater 624a) may be configured to reduce amount of space being consumed by these devices in the housings of the respective components.

Moreover, to communicatively couple the switching devices 636 and the ROADM devices in the ROADM component 622, one or more sets of single-core fibers 661 (a, b, c, d) may be used. Sets of fibers 661a and 661b may communicatively couple switching device 636a to the ROADM component 622 and sets of fibers 661c and 662d may communicatively couple switching device 636b to the ROADM component 622. For example, sets of fibers 661 may be fibers having diameters of 200 um OD, 250um OD, etc.

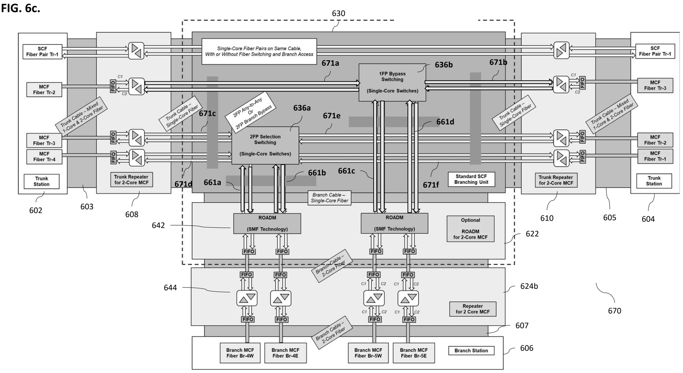

FIG. 6c illustrates another example optical communication system 670, according to the present disclosure. The system 670 may be similar to the system 650 and may communicatively couple stations 602, 604, 606, and the branching node 630. In addition to removing the optional repeater 624a and directly communicatively coupling switching devices 636 (a, b) to the ROADM devices in the ROADM component 622, and removing the FIFO devices (e.g., FIFO devices 635 (b, c), 637 (d, e), and 651), further FIFO devices may be removed. For example, FIFO devices 619, 621 and all FIFO devices 635, 637 may be removed from the system 670.

To communicatively couple the switching devices 636 and the repeaters 608, 610, one or more sets of single-core fibers 671 (a, b, c, d, e, f) may be used. Sets of fibers 671a may communicatively couple the switching device 636b to amplifiers in the repeater 608; sets of fibers 671b the switching device 636b to amplifiers in the repeater 610; sets of fibers 671c and 671d may communicatively couple switching device 636a to respective amplifiers in the repeater 608; and sets of fibers 671e and 671f may communicatively couple switching device 636a to respective amplifiers in the repeater 610. For example, fibers having diameters of 200 um OD, 250um OD, etc. may be used. For example, sets of fibers 671 may be fibers having diameters of 200 um OD, 250um OD, etc., which may be similar to the sets of fibers 661.

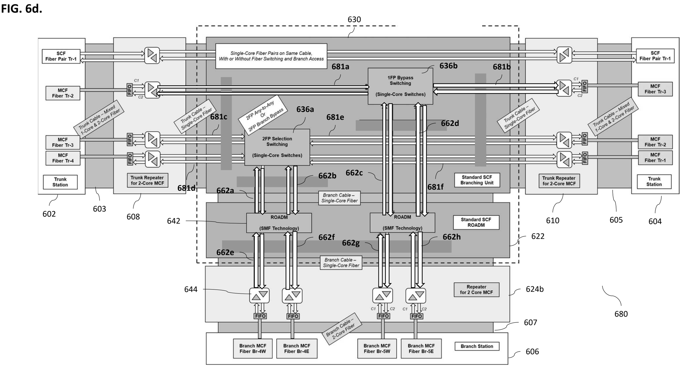

FIG. 6d illustrates yet another example optical communication system 680, according to the present disclosure. The system 680 may be similar to the system 670. However, in the system 680, the optional repeater 624a, FIFO devices 619, 621, 635, 637 as well as all FIFO devices between the ROADM component 622 and the repeater 624b may be removed. Further, in the system 680, switching devices 636 (a, b) may be directly communicatively coupled to the ROADM devices in the ROADM component 622, and the ROADM devices 642 in the ROADM component 622 may be directly communicatively coupled to the amplifiers 644 in the repeater 624b.

The connections between the switching devices 636 the ROADM devices as well as between the ROADM devices and the amplifiers in the repeater 624b may include single core fibers. Likewise, the connections between amplifiers in the repeaters 608, 610 and the switching devices 636 may include single core fibers.

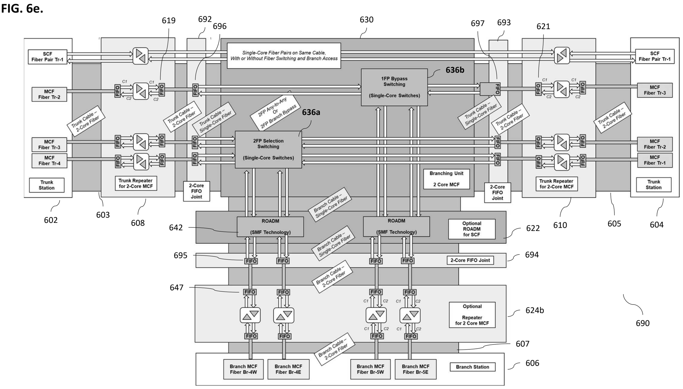

FIG. 6e illustrates a further example optical communication system 690, according to the present disclosure. In system 690, similar to the system 680 (as shown in FIG. 6d), the optional repeater 624a and FIFO devices 635, 637 may be removed. The switching devices 636 (a, b) may also be directly communicatively coupled to the ROADM devices in the ROADM component 622.

However, the system 690 may include one or more FIFO joint components 692, 693, 694, which may include one or more FIFO devices. In particular, FIFO joint component 692 may be positioned on the trunk cable 603 between repeater 608 and the branching node 630. The FIFO joint component 692 may include one or more FIFO devices 696 that may be positioned on the multi-core fibers between FIFO devices 619 of the repeater 608 and the switching devices 636 of the branching node 630.

FIFO joint component 693 may be positioned on the trunk cable 605 between repeater 610 and the branching node 630. The FIFO joint component 693 may include one or more FIFO devices 697 that may be positioned on the multi-core fibers between FIFO devices 621 of the repeater 610 and the switching devices 636 of the branching node 630.

FIFO joint component 694 may be positioned on the branch cable between the ROADM component 622 and the repeater 624b. The FIFO joint component 694 may include one or more FIFO devices 695 that may be positioned on multi-core fiber between FIFO devices 647 of the repeater 624b and the ROADM devices 642 of the ROADM component 622.

One or more of the repeaters 608, 610, 624a, and/or 624b may include at least one of: multi-core (e.g., 2-core) fiber repeater(s), single-core fiber repeater(s), and/or any other type of repeater(s) and/or any combinations thereof. Moreover, one or more of the repeaters 608, 610, 624a, and/or 624b may include any type of amplifiers that may be configured to amplify optical signals that may be received by the repeaters. Further, the ROADM devices 642 may include at least one of: multi-core (e.g., 2-core) fiber ROADM device(s), single-core fiber ROADM device(s), and/or any other type of ROADM devices, and/or any combinations thereof. Additionally, any of the repeaters and/or the ROADM devices may be optional. The branching node 630, the repeater(s) 624 and the ROADM devices and/or any of the FIFO joint components 694 may be positioned in their own respective housings. Alternatively, or in addition, any of these components may be combined into the branching node's housing.

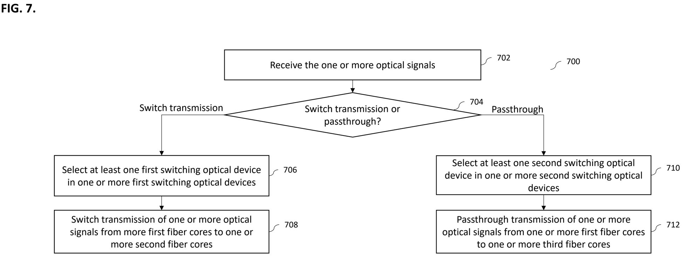

FIG. 7 illustrates an example process 700 for transmission of one or more optical signals, according to the present disclosure. The process 700 may be executed by any of the systems shown in FIGS. 1-6e. The process 700 may, for example, be executed for transmission of optical signals between trunk stations 602, 604 and the branch station 606. The branching node 630 that may be positioned between one or more trunk stations 602, 604, and one or more branch station 606 may be configured to control execution of the process 700. Alternatively, or in addition, execution of the process 700 may be controlled by one or more external components, devices, and/or entities. Further, the process 700 may be used to route and/or re-route optical signals through the branching node 630, which may be configured and/or reconfigured on a per-transmission basis and/or for several transmissions of optical signals. Additionally, the transmissions may be performed on a single-core fiber, 2-core fiber, multi-core fiber, and/or any other type of fiber.

At 702, one or more optical signals may be received. For example, a branching node (e.g., branching node 630, as shown in FIG. 6) may receive such optical signals from one or more trunk stations and/or the branch station. At 704, upon a determination to switch transmission of the received optical signal(s) from one or more first fiber cores (e.g., fibers 613, as shown in FIG. 6) to one or more second fiber cores (e.g., fibers 614b-3, 614b-4, as shown in FIG. 6), the branching node may be configured to select, at 706, at least one first switching optical device (e.g., device 636, as shown in FIG. 6) in one or more first switching optical devices. The first fiber cores may be communicatively coupled to a first trunk station. The second fiber cores may be communicatively coupled to a branch station. At least one first fiber in a plurality of first fibers may include the first fiber cores. At least one second fiber in a plurality of second fibers may include the second fiber cores.

At 708, the branching node may, using the selected first switching optical device, switch transmission of the received optical signals from one or more first fiber cores to one or more second fiber cores (e.g., fibers 614b-3, 614b-4), as shown in FIG. 6).

If at 704, the branching node determines to passthrough transmission of the received optical signals from one or more first fiber cores to one or more third fiber cores, it may select at least one second switching optical device (e.g., device 636a, as shown in FIG. 6) in one or more second switching optical devices, at 710. The third fiber cores may be communicatively coupled to a second trunk station. At least one third fiber in a plurality of third fibers may include the third fiber cores.

At 712, the branching node may then passthrough, using the second switching optical device, transmission of the optical signals from the first fiber cores to the third fiber cores.

The first fiber may include at least of: a single first fiber core, two first fiber cores, four first fiber cores, and any combinations thereof. The second fiber may include at least of: a single second fiber core, two second fiber cores, four second fiber cores, and any combinations thereof. Similarly, the third fiber may include at least of: a single third fiber core, two third fiber cores, four third fiber cores, and any combinations thereof.

Transmission of optical signals may be switched, using the selected switching optical device, from the first fiber to the second fiber. Similarly, passthrough of transmissions of optical signals may be performed, using the selected second switching optical device, from the first fiber to the third fiber.

A number of the first fiber cores being switched using the first switching optical device(s) may at least be one of: different from a number of the second fiber core(s), and same as a number of the second fiber core(s). Alternatively, or in addition, a number of the first fiber core(s) being passed-through using the second switching optical device(s) may at least be one of: different from a number of the third fiber core(s), and same as a number of the third fiber core(s).

At least one fiber switching optical array may communicatively be coupled to one or more first switching optical devices and one or more second switching optical devices may be configured to determine whether to switch or pass-through transmission of one or more optical signals, and select, based on determination whether to switch or pass-through transmission of optical signals, at least one of: at least one first switching optical device and at least one second switching optical device.

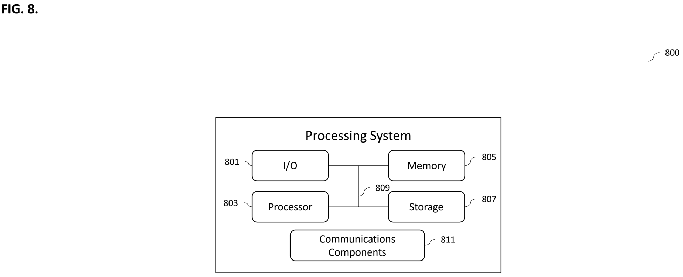

The branching node and/or any other communication component of the systems shown in FIGS. 1-6e may be configured to incorporate one or more processing systems that may be used to control operations of transmission of optical signals. FIG. 8 illustrates an example of such processing system 800. The system 800 may include an input/output (I/O) device 801, a processor 803, a memory 805, a storage 807, and one or more communication components 811. Each of the components 801-807 may be interconnected using a system bus 809. The processor 803 may be configured to process instructions for execution within system 800. The processor 803 may be a single-threaded processor. Alternatively, or in addition, the processor 803 may be a multi-threaded processor. The processor 803 may be further configured to process instructions stored in the memory 805 and/or in the storage 807, including, but not limited to, receiving and/or sending information through the I/O device 801. The memory 805 may store information within the system 800. The memory 805 may be a computer-readable medium. Alternatively, or in addition, the memory 805 may be a volatile memory unit. The memory 805 may be a non-volatile memory unit. The storage 807 may be capable of providing mass storage for the system 800. The storage 807 may be a computer-readable medium. Alternatively, or in addition, the storage 807 may be a floppy disk device, a hard disk device, an optical disk device, a tape device, non-volatile solid state memory, or any other type of storage device. The I/O device 801 may provide input/output operations for the system 800.The I/O device 801 may include a keyboard and/or pointing device. Alternatively, or in addition, the I/O device 801 may include a display unit for displaying graphical user interfaces.

One or more components of the system 800 may include any combination of hardware and/or software. One or more components of the system 800 may be disposed on one or more computing devices, such as, server(s), database(s), personal computer(s), laptop(s), cellular telephone(s), smartphone(s), tablet computer(s), virtual reality devices, and/or any other computing devices and/or any combination thereof. One or more components of the system 800 may be disposed on a single computing device and/or may be part of a single communications network. Alternatively, or in addition to, such services may be separately located from one another.

The system 800's one or more components may include network-enabled computers. As referred to herein, a network-enabled computer may include, but is not limited to a computer device, or communications device including, e.g., a server, a network appliance, a personal computer, a workstation, a phone, a smartphone, a handheld PC, a personal digital assistant, a thin client, a fat client, an Internet browser, or other device. One or more components of the system 800 also may be mobile computing devices, for example, an iPhone, iPod, iPad from Apple^{®} and/or any other suitable device running Apple's iOS^{®} operating system, any device running Microsoft's Windows^{®}. Mobile operating system, any device running Google's Android^{®} operating system, and/or any other suitable mobile computing device, such as a smartphone, a tablet, or like wearable mobile device.

One or more components of the system 800 may include a processor and a memory, and it is understood that the processing circuitry may contain additional components, including processors, memories, error and parity/CRC checkers, data encoders, anti-collision algorithms, controllers, command decoders, security primitives and tamper-proofing hardware, as necessary to perform the functions described herein. One or more components of the system 800 may further include one or more displays and/or one or more input devices. The displays may be any type of devices for presenting visual information such as a computer monitor, a flat panel display, and a mobile device screen, including liquid crystal displays, light-emitting diode displays, plasma panels, and cathode ray tube displays. The input devices may include any device for entering information into the user's device that is available and supported by the user's device, such as a touch-screen, keyboard, mouse, cursor-control device, touch-screen, microphone, digital camera, video recorder or camcorder. These devices may be used to enter information and interact with the software and other devices described herein.

One or more components of the system 800 may execute one or more applications, such as software applications, that enable, for example, network communications with one or more components of system 800 and transmit and/or receive data.

One or more components of the system 800 may include and/or be in communication with one or more servers via one or more networks and may operate as a respective front-end to back-end pair with one or more servers. One or more components of the system 800 may transmit, for example, from a mobile device application (e.g., executing on one or more user devices, components, etc.), one or more requests to one or more servers. The requests may be associated with retrieving data from servers. The servers may receive the requests from the components of the system 800. Based on the requests, servers may be configured to retrieve the requested data from one or more databases. Based on receipt of the requested data from the databases, the servers may be configured to transmit the received data to one or more components of the system 800, where the received data may be responsive to one or more requests.

The system 800 may include and/or be communicatively coupled to one or more networks. Networks may be one or more of a wireless network, a wired network or any combination of wireless network and wired network and may be configured to connect the components of the system 800 and/or the components of the system 800 to one or more servers. For example, the networks may include one or more of a fiber optics network, a passive optical network, a cable network, an Internet network, a satellite network, a wireless local area network (LAN), a metropolitan area network (MAN), a wide area network (WAN), a virtual local area network (VLAN), an extranet, an intranet, a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11b, 802.15.1, 802.11n and 802.11g, Bluetooth, NFC, Radio Frequency Identification (RFID), Wi-Fi, and/or any other type of network and/or any combination thereof.

In addition, the networks may include, without limitation, telephone lines, fiber optics, IEEE Ethernet 802.3, a wide area network, a wireless personal area network, a LAN, or a global network such as the Internet. Further, the networks may support an Internet network, a wireless communication network, a cellular network, or the like, or any combination thereof. The networks may further include one network, or any number of the exemplary types of networks mentioned above, operating as a stand-alone network or in cooperation with each other. The networks may utilize one or more protocols of one or more network elements to which they are communicatively coupled. The networks may translate to or from other protocols to one or more protocols of network devices. The networks may include a plurality of interconnected networks, such as, for example, the Internet, a service provider's network, a cable television network, corporate networks, and home networks.

The system 800 may include and/or be communicatively coupled to one or more servers, which may include one or more processors that maybe coupled to memory. Servers may be configured as a central system, server or platform to control and call various data at different times to execute a plurality of workflow actions. Servers may be configured to connect to the one or more databases. Servers may be incorporated into and/or communicatively coupled to at least one of the components of the system 800.

The various elements of the components as previously described with reference to FIGS. 1-6e may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired.

One or more aspects of at least one implementation may be implemented by representative instructions stored on a machine-readable medium which represents various logic within the processor, which when read by a machine causes the machine to fabricate logic to perform the techniques described herein. Such representations, known as "IP cores", may be stored on a tangible, machine readable medium and supplied to various customers or manufacturing facilities to load into the fabrication machines that make the logic or processor. Some implementations may be implemented, for example, using a machine-readable medium or article which may store an instruction or a set of instructions that, if executed by a machine, may cause the machine to perform a method and/or operations in accordance with the disclosure. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writable or rewritable media, digital or analog media, hard disk, floppy disk, Compact Disk Read Only Memory (CD-ROM), Compact Disk Recordable (CD-R), Compact Disk Rewritable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the exemplary devices shown in the block diagrams described above may represent one functionally descriptive example. Accordingly, division, omission or inclusion of block functions depicted in the accompanying figures does not infer that the hardware components, circuits, software and/or elements for implementing these functions would necessarily be divided, omitted, or included.

At least one computer-readable storage medium may include instructions that, when executed, cause a system to perform any of the computer-implemented methods described herein.

The foregoing description has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner and may generally include any set of one or more limitations as variously disclosed or otherwise demonstrated herein.

## Claims

1. An apparatus for transmission of one or more optical signals, comprising:
one or more first switching optical devices configured to switch transmission of the one or more optical signals from one or more first fiber cores to one or more second fiber cores; and
one or more second switching optical devices configured to pass-through transmission of the one or more optical signals from the one or more first fiber cores to one or more third fiber cores.

2. The apparatus of claim 1, wherein
the one or more first fiber cores are communicatively coupled to a first trunk station;
the one or more second fiber cores are communicatively coupled to a branch station and
the one or more third fiber cores are communicatively coupled to a second trunk station.

3. The apparatus of claim 1 or 2, wherein
at least one first fiber in a plurality of first fibers includes the one or more first fiber cores; at least one second fiber in a plurality of second fibers includes the one or more second fiber cores; and
at least one third fiber in a plurality of third fibers includes the one or more third fiber cores.

4. The apparatus of claim 3, wherein the at least one first fiber in the plurality of first fibers includes at least one of:
a single first fiber core,
two first fiber cores,
four first fiber cores, and any combinations thereof;
wherein the at least one second fiber in the plurality of second fibers includes at least of:
a single second fiber core,
two second fiber cores four second fiber cores, and any combinations thereof; and
the at least one third fiber in the plurality of third fibers includes at least of:
a single third fiber core,
two third fiber cores,
four third fiber cores, and any combinations thereof.

5. The apparatus of claim 3 or 4, wherein the one or more first switching optical devices are configured to switch transmission of the one or more optical signals from the at least one first fiber to the at least one second fiber.

6. The apparatus of any of the claims 3-5, wherein the one or more second switching optical devices are configured to pass-through transmission of the one or more optical signals from the at least one first fiber to the at least one third fiber.

7. The apparatus of any of claims 1-6, wherein a number of the one or more first fiber cores being switched using the one or more first switching optical devices is at least one of: different from a number of the one or more second fiber cores, and same as a number of the one or more second fiber cores.

8. The apparatus of any of claims 1-7, wherein a number of the one or more first fiber cores being passed-through using the one or more second switching optical devices is at least one of: different from a number of the one or more third fiber cores, and same as a number of the one or more third fiber cores.

9. The apparatus of any of claims 1-8, further comprising at least one fiber switching optical array communicatively coupled to the one or more first switching optical devices and the one or more second switching optical devices, wherein the at least one fiber switching optical array is configured to determine whether to switch or pass-through transmission of the one or more optical signals.

10. The apparatus of claim 9, wherein the at least one fiber switching optical array selects at least one first switching optical device in the one or more first switching optical devices for switching transmission of the one or more optical signals.

11. The apparatus of claim 9 or 10, wherein the at least one fiber switching optical array selects at least one second switching optical device in the one or more second switching optical devices for passing-through transmission of the one or more optical signals.

12. An optical communication system comprising an apparatus according to any of the preceding claims for carrying optical signals between land-based terminals and stretches of water, such as across long stretches of ocean and sea.

13. A method for transmission of the one or more optical signals using the apparatus of any of claims 1-11, comprising:
receiving the one or more optical signals;
upon a determination to switch transmission of the one or more optical signals from the one or more first fiber cores to the one or more second fiber cores, selecting at least one first switching optical device in the one or more first switching optical devices and switching, using the selected at least one first switching optical device, transmission of the one or more optical signals from the one or more first fiber cores to the one or more second fiber cores; and
upon determination to pass-through transmission of the one or more optical signals from the one or more first fiber cores to the one or more third fiber cores, selecting at least one second switching optical device in the one or more second switching optical devices and passing-through, using the at least one second switching optical device, transmission of the one or more optical signals from the one or more first fiber cores to the one or more third fiber cores.

14. The method of claim 13, further comprising
switching transmission, using the selected at least one switching optical device, of the one or more optical signals from the at least one first fiber to the at least one second fiber.

15. The method of claim 13 or 14, further comprising
passing-through, using the selected at least one second switching optical device, of the one or more optical signals from the at least one first fiber to the at least one third fiber.
